# FASCICULE DE BREVET EUROPEEN

(11) **EP 1 517 611 B1**
(45) Date de publication et mention de la délivrance du brevet: **28.07.2010**
(21) Numéro de dépôt: 03761671.1
(22) Date de dépôt: 01.07.2003
(51) Int. Cl.: A01N 63/04, A01N 63/00

(54) **MOYENS DE LUTTE BIOLOGIQUE CONTRE LES MALADIES CRYPTOGAMIQUES DES VEGETAUX**
MITTEL ZUR BIOLOGISCHEN BEKÄMPFUNG PILZLICHER PFLANZENKRANKHEITEN
MEANS FOR BIOLOGICALLY CONTROLLING CRYPTOGAMIC PLANT DISEASES

(30) Priorité: 01.07.2002 FR 0208212
(43) Date de publication de la demande: 30.03.2005
(73) Titulaire: UNIVERSITE DE BOURGOGNE, 21078 Dijon Cedex (FR)
(72) Inventeur: PAUL, Bernard, F-21850 Saint Apollinaire (FR)
(74) Mandataire: Peaucelle, Chantal
(86) Numéro de dépôt international: PCT/FR2003/002039
(87) Numéro de publication internationale: WO 2004/002227

(56) Documents cités:
- WO-A-94/19950
- FR-A- 2 813 166
- US-A- 5 270 059
- US-A- 5 403 583
- DATABASE BIOSIS [en ligne] BIOSCIENCES INFORMATION SERVICE, PHILADELPHIA, PA, US; 1989 WILSON C L ET AL: "POSTHARVEST BIOLOGICAL CONTROL OF PENICILLIUM ROTS OF CITRUS WITH ANTAGONISTIC YEASTS AND BACTERIA" Database accession no. PREV198988095325 XP002236920 & SCIENTIA HORTICULTURAE (AMSTERDAM), vol. 40, no. 2, 1989, pages 105-112, ISSN: 0304-4238

### LISTAGE DE SEQUENCES

<110> UNIVERSITE DE BOURGOGNE
<120> Moyens de lutte biologique contre les maladies cryptogamiques des végétaux.
<130> 60873
<160> 3
<170> PatentIn version 3.1
<210> 1
   <211> 335
   <212> DNA
   <213> Bacillus megaterium
<400> 1
   acgtttggac actttgttca gttttgagag agtaatctct caattataga aagcacacta      60
   ctttcttctt atttaataag aagaatattg gctgcgattg ttctttgaaa actagataac     120
   agtcattgct gaggaaaagt gaaacttttc tttaatcaaa ccaataaata acacaacagt     180
   atgttgtacc atttattcgc taatggttaa gttagaaagg gcgcacggtg aatgccttgg     240
   cactaggagc cgatgaagga cgggactaac accgatgtgc ttcggggagc tgtaagtgag     300
   ctttgatccg gagatttccg aatggggaaa cccgc                                335
<210> 2
   <211> 581
   <212> DNA
   <213> Debaryomyces hansenii
<400> 2
   ggatcattac agtattcttt tgccagcgct taactgcgcg gcgaaaaacc ttacacacag      60
   tgtctttttg atacagaact cttgctttgg tttggcctag agataggttg ggccagaggt     120
   ttaacaaaac acaatttaat tatttttaca gttagtcaaa ttttgaatta atcttcaaaa     180
   ctttcaacaa cggatctctt ggttctcgca tcgatgaaga acgcagcgaa atgcgataag     240
   taatatgaat tgcagatttt cgtgaatcat cgaatctttg aacgcacatt gcgccctctg     300
   gtattccaga gggcatgcct gtttgagcgt catttctctc tcaaaccccc gggtttggta     360
   ttgagtgata ctcttagtcg gactaggcgt ttgcttgaaa agtattggca tgggtagtac     420
   tagatagtgc tgtcgacctc tcaatgtatt aggtttatcc aactcgttga atggtgtggc     480
   gggatatttc tggtattgtt ggcccggcct tacaacaacc aaacaagttt gacctcaaat     540
   caggtaggaa tacccgctga acttaagcat atcaataagc g                         581
<210> 3
   <211> 581
   <212> DNA
   <213> Bacillus subtilis
<400> 3

## Description

L'invention vise des moyens, à savoir l'utilisation de compositions pour la lutte biologique contre les maladies cryptogamiques des végétaux, c'est-à-dire provoquées par des champignons pathogènes.

La lutte biologique, c'est-à-dire l'utilisation de microorganismes vivants pour combattre les maladies des plantes, suscite un grand intérêt compte tenu des problèmes croissants posés par l'emploi des fongicides chimiques en agriculture. Les nappes phréatiques polluées, les sols contaminés, et la résistance des champignons pathogènes aux fongicides sont en effet autant de défis à surmonter pour l'agriculture moderne.

Dans le domaine viticole par exemple, il s'impose de produire des vins de qualité toujours plus élevée et de réduire les pollutions occasionnées par l'utilisation intensive de produits chimiques.

Des bactéries, comme *Bacillus Thuringiencis,* ou des champignons, comme Beauveria ou Endothia, ont déjà été proposés comme moyens de lutte biologique.

US 5,270,059 décrit une composition et une méthode d'application adaptées à l'inhibition du développement de champignons pathogènes tels que *Botrytis cinerea* et *Penicillium expansum* chez les fruits pomacés. La composition comprend une levure *Sporobolomyces roseus* et une bactérie *Pseudomonas syringae*.

WO 94/19950 décrit un agent de lutte biologique contre le champignon *Colletrichum* comprenant un mélange de levure du genre *Saccharomyces* et une bactérie de type *Lactobacilli.*

FR 2 813 166 décrit l'utilisation d'un microorganisme de la famille *Geotrichum candidum,* éventuellement associé à une bactérie lactique, contre des champignons ou moisissures producteurs de mycotoxines, notamment de l'espèce *Fusarium,* chez la vigne entre autres végétaux.

US 5,403,583 décrit l'utilisation d'une culture de *Bacillus megaterium* pour contrler un pathogène fongique du soja, *Rhizoctonia solani.*

L'article de Wilson et Chalutz dans Scientia Horticulturae, 1989, vol. 40(2), pages 105-112 décrit l'utilisation de levures et bactéries particulières contre *Penicillium digitalum* Sacc. et *Penicillium italicum* Wehmer chez les agrumes.

Or des moyens de grande efficacité et dépourvus de toxicité ont pu être développés par les inventeurs en utilisant des microorganismes en mélange pour lutter contre les maladies cryptogamiques de la vigne. De tels mélanges, non seulement agissent en synergie dans la lutte biologique recherchée, mais exercent en outre, avec avantage, un effet éliciteur.

En outre, il est apparu que des mélanges particuliers de microorganismes étaient particulièrement efficaces pour le traitement des maladies cryptogamiques des végétaux en général.

L'invention a donc pour but l'utilisation de microorganismes en lutte biologique contre les maladies cryptogamiques de la vigne.

Elle vise également à fournir de nouvelles utilisations de compositions de microorganismes en lutte biologique contre les maladies cryptogamiques des végétaux, plus spécialement des plantes cultivées.

L'utilisation de compositions de microorganismes en lutte biologique contre les maladies cryptogamiques de la vigne est caractérisée en ce que les compositions comprennent en mélange au moins une bactérie et au moins une levure, la ou les bactéries et la ou les levures étant non toxiques pour le végétal.

De manière avantageuse, la ou les bactéries sont choisies dans les groupes *Bacillus, Pseudomonas, Serratia* ou *Streptomyces.*

Il s'agit en particulier de bactérie(s) de l'espèce *Bacillus megaterium,* et tout spécialement de la souche déposée le 20 Juin 2002 à la CNCM, 25 rue du Dr. Roux, 75724 Paris Cedex 15, sous le N°I-2897 et de bactérie(s) de l'espèce *Bacillus subtilis* déposée le 20 juin 2002 à la même Institution sous le n° I-2940.

La ou les levures des compositions utilisées selon l'invention sont avantageusement du genre *Debaryomyces ou Pichia.* Il s'agit en particulier de la levure du genre Debaryomyces déposée le 20 Juin 2002 à la CNCM sous le N°I-2896.

L'invention vise en particulier l'utilisation de la souche de *Bacillus megaterium* (BP B-01) déposée le 20 Juin 2002 à la CNCM, 25 rue du Dr. Roux, 75724 Paris Cedex 15, sous le N°I-2897 et la souche de *Bacillus subtilis* (BP B-10) déposée à la CNCM le 20 juin 2002 sous le n°I-2940.

L'invention vise également l'utilisation de la levure du genre *Debaryomyces* (BP Y-01) déposée le 20 juin 2002 à la CNCM sous le n°I-2896.

Les souches de bactéries et de levures utilisées selon l'invention sont avantageusement sélectionnées à partir de microorganismes du sol ou prélevées sur le végétal à traiter. Elles ne perturbent donc pas l'équilibre biologique de l'écosystème puisqu'elles en sont issues.

Les compositions de ces microorganismes permettent de traiter les principales maladies fongiques des végétaux et sont donc particulièrement appropriées pour élaborer des préparations biofongicides.

Des préparations utilisées selon l'invention sont caractérisées en ce qu'elles renferment une quantité efficace d'au moins une composition de microorganismes comprenant en mélange au moins une bactérie et au moins une levure, la ou les bactéries et la ou les levures étant non toxiques pour le végétal, ainsi qu'une composition de champignons filamenteux, en particulier du genre *Pichia, Pythium, Trichoderma, Gliocladium, Ampelomyces, Talaromyces, Epicococcum* en association avec un véhicule inerte.

Le véhicule utilisé est notamment capable d'assurer une bonne dispersion et adhésion des microorganismes sur la partie aérienne de la plante.

Des préparations biofongicides préferentiellement utilisées sont caractérisées en ce qu'elles renferment une quantité efficace des souches bactériennes et de la souche de levure déposées à la CNCM, tel que défini plus haut. De manière préférée, les préparations biofongicides sont caractérisées par des concentrations en levures de 0,5 à 0,75X10¹⁰ et en bactéries de 0,30 à 0,50X10¹⁰.

Ces préparations présentent un large spectre d'efficacité face aux champignons pathogènes et sont avantageusement utilisées pour le traitement des maladies cryptogamiques des végétaux, notamment des plantes cultivées, en particulier des parties aériennes par exemple vigne, tomate, fraise, blé, pomme de terre, tabac, canne à sucre, maïs, riz, arbres fruitiers, de tubercules par exemples de pommes de terre ou de betterave.

L'efficacité a été également particulièrement remarquée sur les plantes maraîchères.

Elles sont appliquées par exemple au traitement de l'oïdium, du mildiou, et du *Botrytis* de la vigne, ainsi que des maladies du bois (esca ou eutypa).

Ces préparations présentent également l'avantage d'exercer un effet d'éliciteur qui se traduit par une activation des défenses naturelles de la plante contre les agresseurs d'origine fongique.

Les traitements sont effectués notamment par pulvérisation sur les parties aériennes avec des préparations renfermant la ou les bactéries et la ou les levures, avec des quantités modulables selon la pression des pathogènes. Des préparations appropriées renferment par exemple lesdites bactéries et levures dans un rapport d'environ 50/50%.

On notera que l'application de ces traitements ne nécessite aucun changement de matériel de la part de l'utilisateur.

Selon une disposition supplémentaire de l'invention la composition utilisée comprend en outre une composition de champignons, plus spécialement de champignons filamenteux, en particulier du genre *Pythium, Trichoderma, Gliocladium, Ampelomyces, Talaromyces, Epicococcum.*

Après l'application, les souches de la préparation ne restent que quelques jours sur la plante avant de mourir et de se dégrader. Leur présence dans le sol n'est pas supérieure à un taux normalement constaté et est nulle au-delà de trente centimètres de profondeur.

Ces mélanges de microorganismes n'apportent donc aucune nouvelle forme de pollution.

Ces mélanges ont aussi un effet éliciteur pour produire des composés d'intérêt, comme le resvératrol, molécule présentant notamment un effet protecteur du système cardiaque,ou encore le ptérostilbène, en quantités plus élevées que celles produites par la vigne à la suite d'une élicitation telle que celle produite par *Botrytis.*

Le resvératrol est utilisable pour la fabrication de médicaments notamment à visée cardio-vasculaire, en cosmétologie ou comme nutricament. Le ptérostilbène est utilisable comme antifongique.

Les exemples qui suivent sont donnés à des fins d'illustration de l'invention et en se reportant à figure unique qui présente la production de resvératrol avec différentes combinaisons de bactéries et/ou levures et/ou champignons.

Exemple I : Isolement et culture de la souche de bactéries BP B01 et de la levure BP Y01 :
L'isolement est réalisé comme suit :
   Les deux microorganismes sont cultivés sur un milieu nutritif solide le PDA (Potato dextrose agar). Les deux microorganismes sont ensemencés séparément dans des fermenteurs de 20 litres contenant du PDB (Potato dextrose broth). Les levures sont cultivées à 28°C et les bactéries à 37°C. Les microorganismes ainsi préparés sont centrifugés et le culot de bactéries et levures est récupéré séparément dans l'eau distillée stérile. Au moment du traitement du végétal, les deux microorganismes sont mélangés. Le vignoble subit trois traitements par mois, d'avril à août, donc un total de 10 à 12 traitements par le mélange de l'invention pour la saison. Le produit préparé par fermentation est utilisé pour toute la saison, chaque litre contenant de 0,5-0,75X10¹⁰ pour les levures et 0,30-0,50X10¹⁰ pour les bactéries, à raison de 1 litre par pied de vigne.

### Caractérisation de l'ADN génomique de BP B01 et de BP B10

L'isolement de l'ADN génomique de BP B01 et de BP B10, ainsi que l'amplification de leur zone ITS, entre les gènes 16S et 23S a été réalisée selon Chen, W. Schneider RW, et Hoy J.W. 1992, Phytopathology, 82, p 1234-1244. Les séquences correspondantes SEQ ID N°1 et SEQ ID N°3 ont été déposées au GENBANK (N° d'accès respectifs AY 125961 et AY 157575).

La levure BP Y01 a été isolée de baies de raisins provenant de différents vignobles de la région de Bourgogne.

L'ADN génomique de BP Y01 a été isolé et la zone ITS, entre les gènes 18S et 28S amplifiée selon les méthodes ci-dessus.

Le fragment ITS1 se trouve entre les gènes 18S et 5,8 S, tandis que ITS2 se trouve entre les gènes 5,8 S et 28 S. La séquence SEQ ID N°2 a été déposée au GENBANK (N° d'accès AY 125962).

### Résultats de lutte biologique sur le cépage chardonnay en 1999 et 2000 au Centre Expérimental de Marsannay - La Côte, France (Université de Bourgogne)

| **Année :1999** | **Résultats** |
|---|---|
| Nombre de pieds | 450 |
| témoins non traités | 10 |
| Nombre de traitements | 15 |
| Type d'inoculum | Bactéries + Levures |
| Protection | 39 pieds malades (Mildiou), *O Botrytis* |
| Témoins | Mildiou puis *Botrytis* sur tous les pieds, intervention chimique |

| **Année :2000** | **Résultats** |
|---|---|
| Nombre de pieds | 241 |
| Nombre de traitements | 14 |
| Type d'inoculum | Bactéries + Levures |
| Protection | 27 pieds malades (Mildiou), *O Botrytis* |
| Témoins | Mildiou puis *Botrytis* sur tous les pieds |

### Résultats de lutte biologique sur le cépage pinot-noir en 2000 et 2001 au Centre Expérimental de Marsannay - La Côte, France (Université de Bourgogne)

| **Année :2000** | **Résultats** |
|---|---|
| Nombre de pieds | 120 |
| témoins non traités | 13 |
| Nombre de traitements | 14 |
| Type d'inoculum | Bactéries + Levures |
| Témoins | Mildiou puis *Botrytis* sur tous les pieds |
| Protection | 11 pieds malades (Mildiou), *O Botrytis* |

| **Année :2001** | **Résultats** |
|---|---|
| Nombre de pieds | 614 |
| Nombre de traitements | 13 |
| Traitement chimique | 02 |
| témoins non traités | 13 |
| Type d'inoculum | Bactéries + Levures |
| Témoins | Mildiou + *Botrytis* sur tous les pieds |
| Protection | 53 pieds malades (Mildiou), qques grappes infectées par *Botrytis* |
| Rendement | 1,18 kg de raisin par pied au lieu de 1,2-1,5 kg |

De manière générale, on note, en plus de l'effet fongicide et d'éliciteur des préparations utilisées, une amélioration de la qualité de la vendange. On constate notamment une augmentation de la concentration en sucre qui permet de réduire ou d'éviter la chaptalisation. De plus, le taux de resvératrol est augmenté. Enfin, les taux de tanin et d'anthocyanes sont en augmentation, ce qui accorde une meilleure charpente et une couleur plus vive au vin.

Les résultats concernent l'augmentation de resvératrol sont illustrés par l'histogramme de la figure unique qui donne en ug/gm de poids frais la production de resvératrol au 3^{ème} jour après addition respectivement de : BP Y01 (levure déposée à la CNCM); BP B01 (bactérie déposée à la CNCM); BC 03 *(botrytis cinerea*); BP Y01 + B C03; BPB 01 + B C03; BP Y01 + BP B01; BP B01 + BP Y01 + B C03.

L'examen de cet histogramme montre que la formation de resvératrol augmente lorsqu'on ajoute le mélange levure/bactérie de l'invention au champignon *Botrytis.*

Compte tenu de l'ensemble de ces propriétés, les compositions utilisées comme préparations fongicides, selon l'invention, constituent une réponse particulièrement satisfaisante aux problèmes fongiques posés aux cultivateurs, notamment aux viticulteurs et à l'impératif de réduction des pollutions d'origine agricole en constituant des substituts aux produits chimiques.

## Revendications

1. Utilisation de compositions de microorganismes en lutte biologique contre les maladies cryptogamiques de la vigne, **caractérisée en ce que** les compositions comprennent en mélange au moins une bactérie de l'espèce *Bacillus megaterium* et/ou de l'espèce *Bacillus subtilis* et au moins une levure, la ou les levures étant non toxique pour le végétal.

2. Utilisation selon la revendication 1, **caractérisée en ce que** la ou les levures sont du genre *Debaryomyces* ou *Pichia.*

3. Utilisation selon la revendication 1 ou 2, **caractérisée en ce que** la bactérie de l'espèce *Bacillus megaterium* est la souche de *Bacillus megaterium* (BP B-01) déposée le 20 juin 2002 à la CNCM sous le N°1-2897.

4. Utilisation selon l'une quelconque des revendications 1 à 3, **caractérisée en ce que** la bactérie de l'espèce *Bacillus subtilis* est la souche de *Bacillus subtilis* (BP Bu-10) déposée le 20 juin 2002 à la CNCM sous le n° 1-2940.

5. Utilisation selon l'une quelconque des revendications 1 à 4, **caractérisée en ce que** la levure est du genre *Debaryomyces.*

6. Utilisation selon la revendication 5, **caractérisée en ce qu'**il s'agit de la levure Debaryomyces (BP Y-01) déposée le 20 Juin 2002 à la CNCM sous le N°1-2896.

7. Utilisation selon l'une quelconque des revendications 1 à 6, **caractérisée en ce que** les compositions renferment en outre une composition de champignons filamenteux en association avec un véhicule inerte.

8. Utilisation selon la revendication 7, **caractérisée en ce que** les champignons filamenteux sont choisis parmi ceux du genre *Pichia, Pythium, Trichoderma, Gliocladium, Ampelomyces, Talaromyces, Epicococcum.*

9. Utilisation selon l'une quelconque des revendications 1 à 7, **caractérisée par** des concentrations en levures de 0,5 à 0,75X10¹⁰ et en bactéries de 0,30 à 0,50X10²⁰.

10. Utilisation selon l'une quelconque des revendications 1 à 8 pour le traitement de l'oïdium, du mildiou ou du *Botrytis* de la vigne, et d'*eutypa* et *esca*.

11. Utilisation selon l'une quelconque des revendications 1 à 9, **caractérisée en ce que** les compositions sont appliquées par pulvérisation avec la ou lesdites bactéries et la ou lesdites levures, selon la pression des pathogènes.

12. Utilisation selon la revendication 11, caractériseé en ce que la ou lesdites bactéries et la ou lesdites levures sont présentes en rapport 50/50% dans les compositions.

## Claims

1. Use of compositions of microorganisms for biological against the cryptogamic vine diseases, wherein the compositions comprise in a mixture at least one bacterium from the Bacillus megaterium species and/or from the Bacillus subtilis species and at least one yeast, the yeast or yeasts being non-toxic to the plant.

2. The use according to claim 1, wherein the yeast or yeasts are of the Debaryomyces or Pichia genus.

3. The use according to claim 1 or 2, wherein the bacterium from the Bacillus megaterium species is Bacillus megaterium (BP B-01) strain deposited on the 20 Jun. 2002 at the CNCM under No. I-2897.

4. The use according to anyone of claims 1 to 3, wherein the bacterium from the Bacillus subtilis species is Bacillus subtilis (BP B-10) strain deposited on the 20 Jun. 2002 at the CNCM under No. I-2940.

5. The use according to anyone of claims 1 to 4, wherein the yeast is of the Debaryomyces germs.

6. The use according to claim 5, wherein the yeast is of the Debaryomyces (BP Y-01) genus deposited on the 20 Jun. 2002 at the CNCM under no. I-2896.

7. The use according to anyone of claims 1 to 6, wherein the compositions further contain a composition of filamentous fungi in association with an inert vehicle.

8. The use according to claim 7, wherein the filamentous fungi are selected from those of the Pichia, Pythium, Trichoderma, Gliocladium, Ampelomyces, Talaromyces, Epicococcum genus.

9. The use according to anyone of claims 1 to 7, wherein the concentrations of yeasts are of 0.5 to 0.75x10¹⁰ and of bacteria of 0.30 to 0.50x10¹⁰.

10. The use according to anyone of claims 1 to 8, for the treatment of powdery mildew, blue mould or Botrytis of the vine, and eutypa and esca.

11. The use according to anyone of claims 1 to 9, wherein the compositions are applied by spraying with the bacterium or bacteria and said yeast or yeasts, according to the pathogen pressure.

12. The use according to claim 11, wherein said bacterium or said bacteria and said yeast or said yeasts are present in a ratio of 50/50% in the compositions.

## Patentansprüche

1. Verwendung von Zusammensetzungen von Mikroorganismen zur biologischen Bekämpfung von Pilzkrankheiten der Weinrebe, **dadurch gekennzeichnet, dass** die Zusammensetzungen ein Gemisch von wenigstens einem Bakterium der Spezies *Bacillus megaterium* und/oder der Spezies *Bacillus subtilis* und wenigstens einer Hefe umfassen, wobei die Hefe oder Hefen nicht toxisch gegenüber der Pflanze sind.

2. Verwendung gemäß Anspruch 1, **dadurch gekennzeichnet, dass** die Hefe oder Hefen zur Gattung *Debaryomyces* oder *Pichia* gehören.

3. Verwendung gemäß Anspruch 1 oder 2, **dadurch gekennzeichnet, dass** es sich bei dem Bakterium der Spezies *Bacillus megaterium* um den Stamm von *Bacillus megaterium* (BP B-01) handelt, der am 20. Juni 2002 bei der CNCM unter der Nr. I-2897 hinterlegt wurde.

4. Verwendung gemäß einem der Ansprüche 1 bis 3, **dadurch gekennzeichnet, dass** es sich bei dem Bakterium der Spezies *Bacillus subtilis* um den Stamm von *Bacillus subtilis* (BP B-10) handelt, der am 20. Juni 2002 bei der CNCM unter der Nr. I-2940 hinterlegt wurde.

5. Verwendung gemäß einem der Ansprüche 1 bis 4, **dadurch gekennzeichnet, dass** die Hefe zur Gattung *Debaryomyces* gehört.

6. Verwendung gemäß Anspruch 5, **dadurch gekennzeichnet, dass** es sich um die Hefe *Debaryomyces* (BP Y-01) handelt, die am 20. Juni 2002 bei der CNCM unter der Nr. I-2896 hinterlegt wurde.

7. Verwendung gemäß einem der Ansprüche 1 bis 6, **dadurch gekennzeichnet, dass** die Zusammensetzungen weiterhin eine Zusammensetzung von Fadenpilzen in Kombination mit einem inerten Träger umfassen.

8. Verwendung gemäß Anspruch 7, **dadurch gekennzeichnet, dass** die Fadenpilze aus solchen der Gattung *Pichia, Pythium, Trichoderma, Gliocladium, Ampelomyces, Talaromyces, Epicococcum* ausgewählt sind.

9. Verwendung gemäß einem der Ansprüche 1 bis 7, **gekennzeichnet durch** Hefekonzentrationen von 0,5 bis 0,75 x 10¹⁰ und Bakterienkonzentrationen von 0,30 bis 0,50 x 10¹⁰.

10. Verwendung gemäß einem der Ansprüche 1 bis 8 zur Behandlung von *Oidium,* Falschem Mehltau oder *Botrytis* bei der Weinrebe, von Eutypiose und Esca.

11. Verwendung gemäß einem der Ansprüche 1 bis 9, **dadurch gekennzeichnet, dass** die Zusammensetzungen je nach Erregerdruck durch Versprühen mit dem oder den Bakterien und der Hefe oder den Hefen aufgetragen werden.

12. Verwendung gemäß Anspruch 11, **dadurch gekennzeichnet, dass** das oder die Bakterien und die Hefe oder Hefen in den Zusammensetzungen im Verhältnis 50/50 vorhanden sind.
